Europäisches Patentamt

European Patent Office

Office européen des brevets

(19)

(11) **EP 1 296 120 A2**

(12) **EUROPÄISCHE PATENTANMELDUNG**

(43) Veröffentlichungstag:
   **26.03.2003 Patentblatt 2003/13**

(51) Int Cl.⁷: **G01F 9/00**

(21) Anmeldenummer: **02016723.5**

(22) Anmeldetag: **26.07.2002**

(84) Benannte Vertragsstaaten:
   **AT BE BG CH CY CZ DE DK EE ES FI FR GB GR
   IE IT LI LU MC NL PT SE SK TR**
   Benannte Erstreckungsstaaten:
   **AL LT LV MK RO SI**

(30) Priorität: **20.09.2001 DE 10146318**

(71) Anmelder: **ROBERT BOSCH GMBH
   70442 Stuttgart (DE)**

(72) Erfinder: **Wenzler, Thomas
   71296 Heimsheim (DE)**

(54) **Verfahren zur Bestimmung von Kraftstoffverbrauchswerten und Steuergerät für eine Brennkraftmaschine**

(57)   Verfahren zur Bestimmung von Kraftstoffverbrauchswerten bei Brennkraftmaschinen von Kraftfahrzeugen, insbesondere bei direkteinspritzenden Brennkraftmaschinen, wobei die Brennkraftmaschine wenigstens in zwei unterschiedlichen Betriebsarten betreibbar ist, wobei wenigstens in bestimmten, temporären Betriebssituationen die Kraftstoffverbrauchswerte (MKP) unter Berücksichtigung der jeweiligen Betriebsart korrigiert werden (MKPKORR, MKKORR). Die Erfindung umfasst weiterhin ein entsprechendes Steuergerät, ein entsprechendes Computerprogramm mit Programmcode-Mitteln und ein entsprechendes Computerprogrammprodukt mit Programmcode-Mitteln.

Fig. 2

EP 1 296 120 A2

**Beschreibung**

Die Erfindung betrifft ein Verfahren zur Bestimmung von Kraftstoffverbrauchswerten bei Brennkraftmaschinen von Kraftfahrzeugen, insbesondere bei direkteinspritzenden Brennkraftmaschinen, wobei die Brennkraftmaschine wenigstens in zwei unterschiedlichen Betriebsarten betreibbar ist.

Die Erfindung betrifft weiterhin ein entsprechendes Steuergerät für eine Brennkraftmaschine, ein Computerprogramm mit Programmcodemitteln und ein Computerprogrammprodukt mit Programmcodemitteln.

Stand der Technik

Die DE 32 45 546 A1 offenbart eine Vorrichtung zur Bestimmung des momentanen Kraftstoffverbrauchs von Brennkraftmaschinen. Die bestimmten Kraftstoffverbrauchswerte werden hierbei auf einer Anzeigevorrichtung im Sichtfeld des Fahrers des Kraftfahrzeugs dargestellt. Die Vorrichtung zur Bestimmung des momentanen Kraftstoffverbrauchs basiert auf im Steuergerät gespeicherten Verbrauchskennfeldern, die Kraftstoffverbrauchswerte in Abhängigkeit von last- und drehzahlabhängigen Signalen beinhalten. Entsprechend der DE 32 45 546 A1 wird vor der Anzeige der aus den Verbrauchskennfeldern entnommenen Werte eine Korrektur der Werte in Abhängigkeit von beschleunigungs- und/oder temperaturabhängigen Werten vorgenommen.

Aus der DE 197 39 848 A1 ist eine direkteinspritzende Brennkraftmaschine für ein Kraftfahrzeug bekannt, die im Abgasstrang mit einem Oxidationskatalysator und zusätzlich mit einem Speicherkatalysator ausgestattet ist. Die Brennkraftmaschine kann in einer ersten Betriebsart, dem Schichtbetrieb, während der der Kraftstoff von einem Einspritzventil während einer durch einen Kolben hervorgerufenen Verdichtungsphase direkt in einen Brennraum eingespritzt wird, betrieben werden, oder in einer zweiten Betriebsart, dem Homogenbetrieb, während dem der Kraftstoff von dem Einspritzventil während einer durch den Kolben hervorgerufenen Ansaugphase direkt in den Brennraum eingespritzt wird. Während in der ersten Betriebsart, dem Schichtbetrieb, im Brennraum ein Sauerstoffüberschuss vorherrscht (magere Verbrennung), herrscht während der zweiten Betriebsart, dem Homogenbetrieb, im Brennraum ein stöchiometrisches Gemisch oder Sauerstoffmangel (fette Verbrennung) vor. Der im Abgastrakt angeordnete Speicherkatalysator dient entsprechend der DE 197 39 848 A1 dazu, die während der Verbrennung mit Sauerstoffüberschuss (Schichtbetrieb) entstehenden Stickstoffoxide aufzunehmen. Hierbei ist die Kapazität des Speicherkatalysators begrenzt. Um den Speicherkatalysator von den eingelagerten Stickstoffoxiden zu befreien bzw. zu entleeren, ist ein temporärer Betrieb (üblicherweise in der Größenordnung von etwa 1 bis 2 Sekunden) mit Sauerstoffmangel (Homogenbetrieb) notwendig. Durch den während des fetten Homogenbetriebs vorherrschenden Sauerstoffmangel gibt der Speicherkatalysator die aufgenommenen Stickstoffoxide wieder ab.

Eine Brennkraftmaschine für ein Kraftfahrzeug weist je nach aktuell vorherrschender Betriebsart unterschiedliche Kraftstoffverbräuche auf:

-   Im Schichtbetrieb wird in der Regel die geringste Kraftsoffmenge verbraucht.
-   Im Homogenbetrieb mit Lambda=1 (stöchiometrischer Betrieb) stellt sich gegenüber dem Schichtbetrieb ein schlechterer Wirkungsgrad ein, was zu einem erhöhten Kraftstoffverbrauch führt. Die Wirkungsgradeinbuße ist in erster Linie auf die im Homogenbetrieb vorherrschenden Drosselverluste zurückzuführen.
-   Im Homogenbetrieb mit Lambda<1 (fettes Gemisch) stellt sich ein noch höherer Kraftstoffverbrauch bei nahezu unverändertem Drehmoment ein.

So kann eine Brennkraftmaschine entsprechend der DE 197 39 848 A1 bei gleicher Last bzw. bei gleicher Fahrpedalstellung im Schichtbetrieb einen anderen Kraftstoffverbrauch aufweisen als im Homogenbetrieb. Dies kann bei konstanter Fahrt, mit konstanter Last und konstantem vom Fahrer angeforderten Moment (über das Fahrpedal) dazu führen, dass der Kraftstoffverbrauch der Brennkraftmaschine während der Reinigung des Speicherkatalysators temporär (für ca. 1 bis 2 Sekunden) einen Sprung macht. Ist dieses Fahrzeug zusätzlich mit einer Kraftstoffverbrauchsanzeige entsprechend der
DE 32 45 546 A1 ausgestattet, so ist dieser temporäre Sprung im Kraftstoffverbrauch für den Fahrer des Kraftfahrzeugs auf der Kraftstoffverbrauchsanzeige sichtbar.

Vorteile der Erfindung

Ein erfindungsgemäßes Verfahren zur Bestimmung von Kraftstoffverbrauchswerten bei Brennkraftmaschinen von Kraftfahrzeugen, insbesondere bei direkteinspritzenden Brennkraftmaschinen, wobei die Brennkraftmaschine wenigstens in zwei unterschiedlichen Betriebsarten betreibbar ist, ist gegenüber dem Stand der Technik dadurch weitergebildet, dass wenigstens in bestimmten, temporären Betriebssituationen die Kraftstoffverbrauchswerte unter Berücksichtigung der jeweiligen Betriebsart korrigiert werden. Durch diese erfindungsgemäße Weiterbildung ergibt sich der große Vorteil, dass die Bestimmung der Kraftstoffverbrauchswerte ideal an die möglichen Betriebsarten einer direkteinspritzenden Brennkraftmaschine, sowohl einer Benzinbrennkraftmaschine als auch einer Dieselbrennkraftmaschine, angepasst ist.

Die bevorzugte Weiterbildung des erfindungsgemäßen Verfahrens sieht vor, dass die korrigierten Kraftstoffverbrauchswerte wenigstens auf einer optischen Anzeige im Sichtfeld eines Fahrers des Kraftfahrzeugs angezeigt werden und/oder zur Bestimmung einer Restreichweite des Kraftfahrzeugs und/oder zur Bestimmung eines Tankinhalts des Kraftfahrzeugs herangezogen werden. Durch diese Weiterbildungen wird in besonders vorteilhafter Weise eine Kraftstoffverbrauchsanzeige im Sichtfeld des Fahrers des Kraftfahrzeugs derart angesteuert, dass in bestimmten, temporären Betriebssituationen die Kraftstoffverbrauchsanzeige nicht springt. Insbesondere dann, wenn die bestimmten, temporären Betriebssituationen nicht durch den Fahrer des Kraftfahrzeugs hervorgerufen werden, ist es in der Regel unerwünscht, dass die Kraftstoffverbrauchsanzeige einen Sprung aufweist. Gleichzeitig können die korrigierten Kraftstoffverbrauchswerte vorteilhaft zur Bestimmung der Restreichweite des Kraftfahrzeugs bzw. zur Bestimmung des Tankinhalts des Kraftfahrzeugs herangezogen werden, da hier ein einfaches Ausblenden von Sprüngen im Kraftstoffverbrauch zu Fehlberechnungen führen würde. Diesen Nachteil weist das erfindungsgemäße Verfahren nicht auf, da die Kraftstoffverbrauchswerte derart korrigiert werden, dass im zeitlichen Mittel der gesamte Kraftstoffverbrauch dem tatsächlichen Kraftstoffverbrauch entspricht.

Eine weitere besonders bevorzugte Weiterbildung des erfindungsgemäßen Verfahrens sieht vor, dass ein realer Kraftstoffverbrauchswert mit einem betriebsartenabhängigen Faktor verknüpft wird und dass sich als Ergebnis der Verknüpfung ein durch einen Betriebsartenwechsel hervorgerufener Kraftstoffdifferenzverbrauchswert und ein Kraftstoffverbrauchswert, der sich ohne den Betriebsartenwechsel ergeben hätte, ergibt. Vorteilhaft wird der Kraftstoffdifferenzverbrauchswert zeitlich gefiltert, insbesondere linear, wobei das Filter eine Filterzeitkonstante aufweist, die eine Größenordnung über einer Zeitdauer der Dauer der bestimmten, temporären Betriebssituation liegt. Wenn weiterhin die Summe aus dem gefilterten Kraftstoffdifferenzverbrauchswert und dem Kraftstoffverbrauchswert, der sich ohne den Betriebsartenwechsel ergeben hätte, gebildet wird, so ergibt sich in besonders vorteilhafter Weise der korrigierte Kraftstoffverbrauchswert, der in bestimmten, temporären Betriebssituationen nicht zu einem Sprung der Kraftstoffverbrauchsanzeige führt und zudem zu einer korrekten Bestimmung der Restreichweite des Kraftfahrzeugs und/oder zur Bestimmung des Tankinhalts des Kraftfahrzeugs herangezogen werden kann.

Vorteilhaft umfassen die verschiedenen Betriebsarten wenigstens eine Homogenbetriebsart, während der Kraftstoff wenigstens in einer durch einen sich bewegenden Kolben hervorgerufenen Ansaugphase in einen Brennraum eingespritzt wird, und eine Schichtbetriebsart, während der Kraftstoff wenigstens in einer durch den sich bewegenden Kolben hervorgerufenen Verdichtungsphase in den Brennraum eingespritzt wird. Dies stellt die vorteilhafte Verfahrensweise bei einer Benzinbrennkraftmaschine mit einem Speicherkatalysator für Stickstoffoxide dar.

Vorteilhaft können die verschiedenen Betriebsarten auch wenigstens eine Nacheinspritzbetriebsart, während der Kraftstoff nach bereits erfolgter Kompressionszündung eines sich bereits in einem Brennraum befindlichen Kraftstoffluftgemisches in den Brennraum eingespritzt wird, umfassen. Dies ist die vorteilhafte Verfahrensweise bei einer Dieselbrennkraftmaschine.

Besonders vorteilhaft umfassen die bestimmten, temporären Betriebssituationen sowohl bei der Benzin- als auch bei der Dieselbrennkraftmaschine wenigstens die Katalysatorreinigung, wodurch ein temporärer Wechsel der Betriebsart ausgelöst wird. Im Falle einer Benzinbrennkraftmaschine wird durch die Katalysatorregenerierung ein Stickoxidspeicherkatalysator und im Falle einer Dieselbrennkraftmaschine ein Partikelfilter gereinigt.

Ein erfindungsgemäßes Steuergerät für eine Brennkraftmaschine, insbesondere eines Kraftfahrzeugs, ist gegenüber dem Stand der Technik dadurch weitergebildet, dass Mittel zur Durchführung der Schritte des zuvor beschriebenen erfindungsgemäßen Verfahrens vorhanden sind. Hierbei repräsentiert das Steuergerät, das das erfindungsgemäße Verfahren durchführt, die Erfindung.

Von besonderer Bedeutung sind weiterhin die Realisierungen in Form eines Computerprogramms mit Programmcodemitteln und in Form eines Computerprogrammprodukts mit Programmcodemitteln. Das erfindungsgemäße Computerprogramm weist Programmcodemittel auf, um alle Schritte des erfindungsgemäßen Verfahrens durchzuführen, wenn das Programm auf einem Computer insbesondere einem Steuergerät für eine Brennkraftmaschine eines Kraftfahrzeugs ausgeführt wird. In diesem Fall wird also die Erfindung durch ein in dem Steuergerät abgespeichertes Programm realisiert, so dass dieses mit dem Programm versehene Steuergerät in gleicher Weise die Erfindung darstellt wie das Verfahren, zu dessen Ausführung das Programm geeignet ist. Das erfindungsgemäße Computerprogrammprodukt weist Programmcodemittel auf, die auf einem computerlesbaren Datenträger gespeichert sind, um das erfindungsgemäße Verfahren durchzuführen, wenn das Programmprodukt auf einem Computer, insbesondere einem Steuergerät für eine Brennkraftmaschine eines Kraftfahrzeugs, ausgeführt wird. In diesem Fall wird also die Erfindung durch einen Datenträger realisiert, so dass das erfindungsgemäße Verfahren ausgeführt werden kann, wenn das Programmprodukt bzw. der Datenträger in ein Steuergerät für eine Brennkraftmaschine insbesondere eines Kraftfahrzeugs integriert wird. Als Datenträger bzw. als Computerprogrammprodukt kann insbesondere ein elektrisches Speichermedium zur Anwendung kommen, beispielsweise ein Read-Only-Memory (ROM), ein EPROM oder auch ein elektrischer Permanentspeicher, wie beispielsweise eine CD-ROM oder eine DVD.

Weitere Merkmale, Anwendungsmöglichkeiten und Vorteile der Erfindung ergeben sich aus der nachfolgenden Beschreibung von Ausführungsbeispielen der Erfindung, die in den nachfolgenden Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. ihrer Darstellung in der Zeichnung.

Beschreibung von Ausführungsbeispielen

Figur 1      zeigt ein erstes Ausführungsbeispiel des erfindungsgemäßen Verfahrens,

Figur 2      zeigt erläuternd das gleiche Ausführungsbeispiel in anderer Darstellung und

Figur 3      zeigt ein erfindungsgemäßes Steuergerät.

Der Kraftstoffverbrauch eines Otto-Motors kann trotz gleichbleibendem Betriebspunkt (konstante Motordrehzahl, konstantes indiziertes Moment) kurzzeitigen Schwankungen unterliegen, wenn bestimmte, temporäre Betriebssituationen vorliegen. Dies kann beispielsweise die Gemischanfettung zur Reinigung eines Speicherkatalysators bei einer direkteinspritzenden Benzinbrennkraftmaschine sein, ebenso wie die Momentenreserve bzw. die Betriebsart Lambdasplit, um Schwefel aus dem Speicherkatalysator auszuräumen.

Als Momentenreserve bezeichnet man einen Drehmomentenbetrag, der durch Verstellen des Zündwinkels in Richtung früh schlagartig abgerufen werden kann. Da im Homogenbetrieb mit stöchiometrischem Gemisch in der Regel immer der frühest mögliche bzw. der optimale Zündwinkel gewählt wird, ist dies in diesem Fall nicht möglich. Eine Momentenreserve muß also vorbereitend durch erhöhen der Füllung und Spätverstellung der Zündung (verbunden mit einer Verschlechterung des Wirkungsgrades und somit nahezu sprunghafter Erhöhung des aktuellen Kraftstoffverbrauchs) eingestellt werden.

Unter Lambdasplit versteht man eine Katalysatorheizmaßnahme, bei der eine Zylinderbank fett und die andere mager betrieben wird. Die Abgasströme werden zusammengeführt und die darin enthaltene chemische Energie wird im Katalysator frei und führt damit zu einer Erwärmung des Katalysators. Diese Erwärmung ist erforderlich, um eine Desulfatisierung vorzunehmen. Die Betriebsart Lambdasplit ist ebenfalls mit einer Wirkungsgradverschlechterung und somit einem erhöhten Kraftstoffverbrauch verbunden.

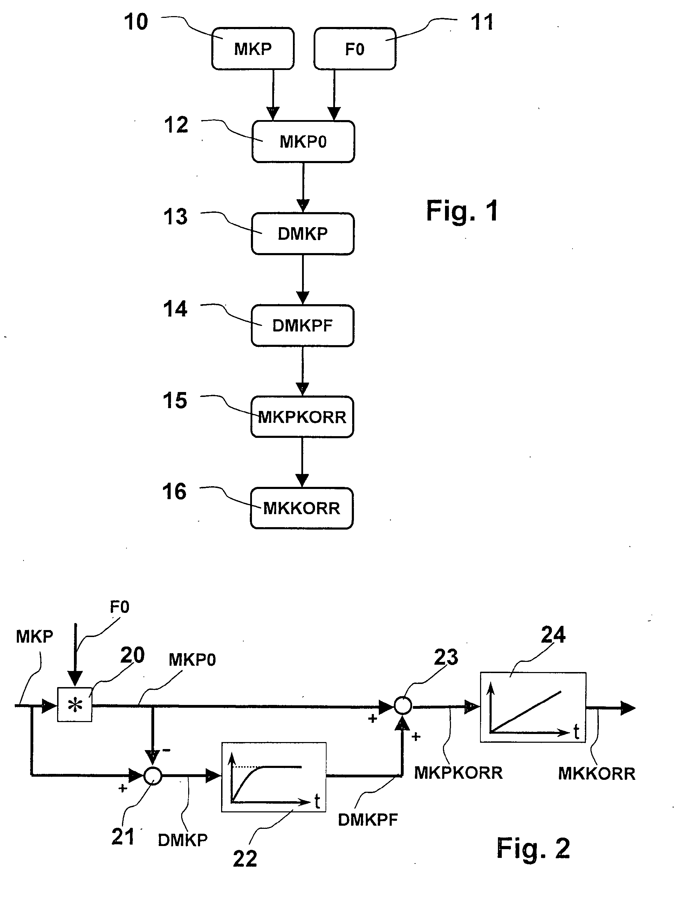

Alle diese Schwankungen des Kraftstoffverbrauchs sind dann auch in der Kraftstoffverbrauchsanzeige zu sehen, was unter Umständen unerwünscht ist. Die vorliegende Erfindung ersetzt das bisherige Verbrauchssignal bzw. das Volumenstromsignal durch ein Signal, das diese Schwankung nicht enthält, aber dennoch zu einem korrekt berechneten Verbrauch führt. Hierzu wird der aktuelle tatsächliche Kraftstoffverbrauch während der Zeitdauer, während der die bestimmten, temporären Betriebssituationen vorliegen, mit einem dimensionslosen Faktor F0 multipliziert, in den Wirkungsgrade und Luftzahlen eingehen, so dass sich ein Kraftstoffverbrauch ergibt, der sich ohne die bestimmten, temporären Betriebssituationen einstellen würde. Damit das aufintegrierte Verbrauchssignal korrekt bleibt, wird der zeitlich gefilterte Fehler wieder aufaddiert. Das detaillierte Vorgehen hierzu zeigen die Figuren 1 und 2.

Das erste Ausführungsbeispiel des erfindungsgemäßen Verfahrens nach Figur 1 startet in einem ersten Schritt 10 mit der Bestimmung des realen aktuellen Kraftstoffmassenstroms MKP und bestimmt parallel hierzu in einem Schritt 11 einen aktuellen dimensionslosen Faktor F0. Auf die detaillierte Bestimmung von F0 wird im Weiteren noch eingegangen. Im Allgemeinen ist der dimensionslose Faktor F0 gleich 1 und nimmt für den Zeitraum der bestimmten, temporären Betriebssituationen einen Wert an, der von 1 abweicht. In einem Schritt 12 des Verfahrens, der sich an die parallelen Schritte 10 und 11 anschließt, wird der reale aktuelle Kraftstoffmassenstrom MKP mit dem dimensionslosen Faktor F0 verknüpft bzw. multipliziert, und man erhält als Ergebnis den Kraftstoffmassenstrom MKP0, der sich ohne das Vorhandensein der bestimmten, temporären Betriebssituation ergeben würde. In einem Schritt 13 des Verfahrens wird der Kraftstoffmassenstrom MKP0, der sich ohne das Vorliegen der bestimmten, temporären Betriebssituation ergeben würde, vom realen Kraftstoffmassenstrom MKP subtrahiert und es ergibt sich als Ergebnis ein Differenzkraftstoffmassenstrom DMPK, der durch die bestimmten, temporären Betriebssituationen hervorgerufen wurde. In einem Schritt 14 wird der zuvor bestimmte Differenzmassenstrom DMKP linear gefiltert und es ergibt sich der linear gefilterte Differenzkraftstoffmassenstrom DMKPF. Hierbei ist es besonders wichtig, dass ein lineares Filter verwendet wird, um, wie später noch gezeigt wird, einen korrekten gesamten Kraftstoffverbrauch zu erhalten. Wäre das Filter nicht linear, käme es zu einer inkorrekten Bestimmung des Gesamtkraftstoffverbrauchs. Eine weitere wichtige erfindungsgemäße Bedingung besteht darin, dass die Zeitkonstante des Filters so gewählt wird, dass diese eine Größenordnung über der Zeitdauer des Vorliegens der bestimmten, temporären Betriebssituation liegt. In einem Schritt 15 wird der Kraftstoffmassenstrom MKP0, der sich ohne die bestimmten, temporären Betriebssituationen ergeben würde, mit dem linear gefilterten Differenzkraftstoffmassenstrom DMKPF aufsummiert, und es ergibt sich ein erfindungsgemäß korrigierter Kraftstoffmassenstrom MKPKORR, der beispielsweise schon an eine Anzeigeeinheit geliefert werden kann. In einem Schritt 16 wird schließlich der korrigierte Kraftstoffmassenstrom MKPKORR über die Zeitdauer des Fahrzyklus TTRIP aufintegriert, und es ergibt sich ein korrigierter Kraftstoffverbrauch MKKORR, der nahezu dem realen Kraftstoffverbrauch MK entspricht.

Der in Schritt 11 bestimmte, dimensionslose Faktor F0 kann im Fall einer direkteinspritzenden Brennkraftmaschine, die nach dem Otto-Prinzip arbeitet, wie folgt berechnet werden:

Zunächst wird das inneres Moment der Brennkraftmaschine bestimmt, solange die bestimmte, temporäre Betriebssituation vorliegt:

$$MI = K1 \cdot RL \cdot 0{,}5 \cdot (ETAZW1 \cdot ETALAM1 + ETAZW2 \cdot ETALAM2) \qquad (1)$$

Das indizierte Moment erhält man, in dem man vom inneren Moment die Drosselverluste subtrahiert:

$$MIND = MI - MDR =$$

$$K1 \cdot RL \cdot 0{,}5 \cdot (ETAZW1 \cdot ETALAM1 + ETAZW2 \cdot ETALAM2) \cdot \frac{MI - MDR}{MI} \qquad (2)$$

Daraus kann das innere Moment im stöchiometrischen Homogenbetrieb betrieb bestimmt werden:

$$MI0 = K1 \cdot RL0 \cdot ETAZWBAS \cdot ETALAM0 \qquad (3)$$

Für das indizierte Moment im Normalbetrieb gilt entsprechend:

$$MIND0 = MI0 - MDR0 \qquad (4)$$

Der zu berechnende Faktor F0 soll das Verhältnis der Kraftstoffmassenströme bei vorliegen von bestimmten, temporären Betriebssituationen bzw. unter Normalbetrieb wiedergeben. Damit beim Übergang von Normalbetrieb zur bestimmten, temporären Betriebssituation und umgekehrt kein spürbarer Momentensprung entsteht, muss

$$MIND = MIND0 \text{ gelten.} \qquad (5)$$

Hier kann zwischen zwei Fällen unterscheiden werden:

Im Fall 1:

Dies ist der wichtigste Fall, bei dem während der Fahrt im Schichtbetrieb temporär zur Katalysatorreinigung in den fetten Homogenbetrieb (mit Lambda<1) übergegangen wird. Es werden somit festgelegt:
Normalbetriebsart = Schichtbetrieb
Bestimmte, temporäre Betriebssituation = Homogenbetrieb mit Lambda<1

Hier können im Normalbetrieb bzw. im Schichtbetrieb (näherungsweise ungedrosselte Betriebsweise) die Drosselverluste vernachlässigt werden (MDR0 ≈ 0), so dass sich mit (2) und (3) aus MIND = MI0

$$RL0 = \frac{0{,}5 \cdot (ETAZW1 \cdot ETALAM1 + ETAZW2 \cdot ETALAM2) \cdot \dfrac{MI - MDR}{MI}}{ETAZWBAS \cdot ETALAM0} \cdot RL$$

ergibt.

Hinweis: Hier wird (3) dazu verwendet das innere Moment im Schichtbetrieb durch das innere Moment im Homogenbetrieb anzunähern (dies entspricht der Annahme, dass der bessere Wirkungsgrad im Schichtbetrieb allein durch den Wegfall der Drosselverluste hervorgerufen wird).

Für die relative Kraftstoffmasse gilt solange die bestimmte, temporäre Betriebssituation vorliegt (Homogenbetrieb, in der Regel angedrosselt):

$$RK = RL \cdot 0{,}5 \cdot \left( \frac{1}{Lambda1} + \frac{1}{Lambda2} \right) \tag{7}$$

Für die relative Kraftstoffmasse im Normalbetrieb/Schichtbetrieb gilt:

$$RK0 = \frac{RL0}{Lambda0} \tag{8}$$

Dividiert man (8) durch (7) so erhält man:

$$RK0 = \frac{2 \cdot RL0}{Lambda0 \cdot RL \cdot \left( \frac{1}{Lambda1} + \frac{1}{Lambda2} \right)} \cdot RK \tag{9}$$

Mit (6) ergibt sich ein Ausdruck, mit dem sich die relative Kraftstoffmasse, die sich im Normalbetrieb (Schichtbetrieb) ergeben würde, aus der aktuellen relativen Kraftstoffmasse während der bestimmten, temporären Betriebssituation, errechnen lässt.

$$RK0 = \frac{\left( ETAZW1 \cdot ETALAM1 + ETAZW2 \cdot ETALAM2 \right) \cdot \dfrac{MI - MDR}{MI}}{ETAZWBAS \cdot ETALAM0 \cdot Lambda0 \cdot \left( \dfrac{1}{Lambda1} + \dfrac{1}{Lambda2} \right)} \cdot RK \tag{10}$$

Sämtliche Größen auf der rechten Seite der Gleichung werden in der Regel von einem Motorsteuergerät eines modernen Kraftfahrzeugs bereits zu Verfügung gestellt.
Die Berechnung lässt sich noch vereinfachen durch:

$$\frac{2}{\left( \dfrac{1}{Lambda1} + \dfrac{1}{Lambda2} \right)} \approx \frac{Lambda1 + Lambda2}{2} \cdot \tag{11}$$

Auch könnten Annahmen, wie ETALAM0 = 1, Lambda0 = 1 oder ETAZWBAS = 1 die Berechnung noch etwas vereinfachen.
Da bei gleichbleibender Drehzahl RK proportional zu MKP ist, gilt entsprechend:

$$MKP0 = \underbrace{\frac{\left( ETWAZW1 \cdot ETALAM1 + ETAZW2 \cdot ETALAM2 \right) \cdot \dfrac{MI - MDR}{MI}}{ETAZWBAS \cdot ETALAM0 \cdot Lambda0 \cdot \left( \dfrac{1}{Lambda1} + \dfrac{1}{Lambda2} \right)}}_{F01} \cdot MKP \tag{12}$$

Damit ist der Faktor F01 für den ersten Fall bestimmt.

Im Fall 2:

Normalbetriebsart = Homogenbetrieb mit Lambda=1 Bestimmte, temporäre Betriebssituation = Fetter Homogenbetrieb mit Lambda<1

Man erhält aus (5), (2) und (4) unter der Annahme, dass die Drosselverluste etwa gleich groß sind (MDR = MDR0) :

$$MI = MI0 \tag{13}$$

und daraus bei gleicher Vorgehensweise, wie in Fall 1:

$$MKP0 = \underbrace{\frac{\left(ETAZW1 \cdot ETALAM1 + ETAZW2 \cdot ETALAM2\right)}{ETAZWBAS \cdot ETALAM0 \cdot Lambda0 \cdot \left(\dfrac{1}{Lambda1} + \dfrac{1}{Lambda2}\right)}}_{F02} \cdot MKP \tag{14}$$

Bildet man die Differenz zwischen MKP und MKP0 erhält man den Kraftstoffmassenstrom, der durch die bestimmte, temporäre Betriebssituation zusätzlich verbraucht wird (DMKP).
Ist die Normalbetriebsart eine ungedrosselte Betriebsart (z.B. Schichtbetrieb), so wird während der temporären Betriebssituation F01 verwendet. Ist die Normalbetriebsart eine gedrosselte Betriebsart (z.B. Homogenbetrieb mit Lambda=1), so wird F02 verwendet.
Viele Kraftstoffverbrauchsanzeigen berechnen den Anzeigewert aber nicht aus dem Massen- oder Volumenstrom, sondern aus dem zeitlichen Integral über den Massen- bzw. Volumenstrom. Dieser Verbrauchswert (in kg oder Litern) wird auch für andere Zwecke, wie z.B. Restreichweite, verwendet. Deshalb ist es wichtig, dass das Integral über die gesamte Fahrzykluszeit den tatsächlich verbrauchten Kraftstoff enthält. Damit der aufintegrierte Verbrauch also dem tatsächlichen Verbrauch entspricht wird der zusätzlich Verbrauchte Anteil zunächst linear gefiltert (mit einer Filterzeitkonstanten, die eine Größenordnung über der Zeitdauer des Vorliegens der bestimmten, temporären Betriebssituationen liegt) und dann wieder addiert.
Das Filter muss linear sein, dann gilt:

$$\int_{0}^{TTRIP} MKP \cdot dTAU \quad \approx \quad \int_{0}^{TTRIP} \left(MKP0 + DMKPF\right) \cdot dTAU \tag{15}$$

Einer der großen Vorteile dieser Methode liegt im sehr geringen Applikationsaufwand, da die Berechnung des Faktors auf den Physikalischen Gegebenheiten basiert und die eingerechneten Größen bereits in den meisten aktuellen Motorsteuergeräten gebildet werden.
Figur 2 zeigt das in Figur 1 beschriebene erfindungsgemäße Verfahren in einer anderen Darstellung: Das Signal des aktuellen Kraftstoffmassenstroms MKP wird einem Multiplikator 20 und einem Summationspunkt 21 zugeführt. Dem Multiplikator 20 wird zusätzlich der, wie zuvor bestimmte, dimensionslose Faktor F0 zugeführt. Das Ergebnis des Multiplikators 20 ist der Kraftstoffmassenstrom MKP0, der sich ohne die bestimmten, temporären Betriebssituationen ergeben würde. Das Ausgangssignal des Multiplikators 20 wird dem Summationspunkt 21 und dem Summationspunkt 23 zugeführt. Im Summationspunkt 21 wird vom aktuellen Kraftstoffmassenstrom MKP das zuvor bestimmte Signal des Kraftstoffmassenstroms MKP0, der sich ohne die bestimmten, temporären Betriebssituationen ergeben würde, subtrahiert und es ergibt sich der Differenzkraftstoffmassenstrom DMKP, der sich durch die bestimmten, temporären Betriebssituationen ergibt. Dieses Signal DMKP wird einem linearen Filter 22 zugeführt, das eine Filterzeitkonstante aufweist, die eine Größenordnung über der Zeitdauer des Vorliegens der bestimmten, temporären Betriebssituationen liegt. Das Ergebnis des Filters 22 ist der linear gefilterte Differenzkraftstoffmassenstrom DMKPF, der sich durch die bestimmten, temporären Betriebssituationen ergibt. Im Summationspunkt 23 wird das Signal MKP0 mit dem Signal DMKPF aufsummiert und es ergibt sich ein erfindungsgemäß korrigierter Kraftstoffmassenstrom MKPKORR. Dieser korrigierte Kraftstoffmassenstrom MKPKORR wird einem Integrator 24 zugeführt, der das Signal MKPKORR über der Zeitdauer des Fahrzyklus TTRIP integriert. Das Ergebnis bzw. der Ausgang des Integrators 24 ist ein erfindungsgemäß korrigierter Kraftstoffverbrauchswert MKKORR, der näherungsweise dem realen Kraftstoffverbrauch entspricht.

Vorstehend wurde das erfindungsgemäße Verfahren am Beispiel einer direkteinspritzenden Benzinbrennkraftmaschine beschrieben. Insbesondere wurde die Berechnung der dimensionslosen Faktoren F0 für diesen Fall dargelegt. Selbstverständlich ist das erfindungsgemäße Verfahren auch im Rahmen einer Dieselbrennkraftmaschine anwendbar. In diesem Fall ist es dem Fachmann überlassen, den dimensionslosen Faktor F0 entsprechend an die verschiedenen Betriebsarten einer Dieselbrennkraftmaschine anzupassen.

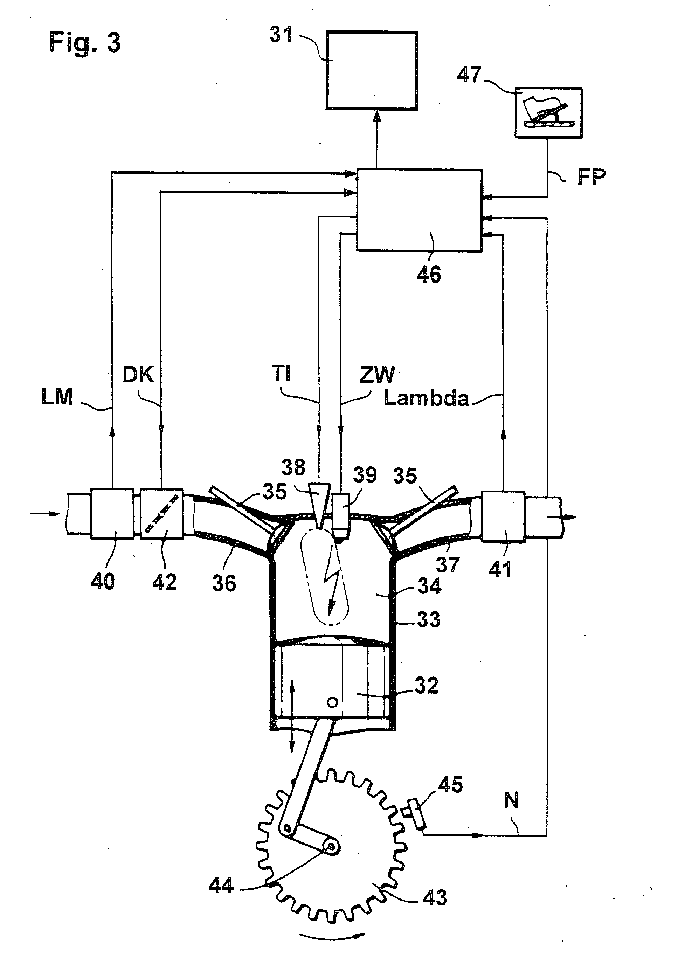

In der Figur 3 ist eine direkteinspritzende Brennkraftmaschine mit einem erfindungsgemäßen Steuergerät 46 dargestellt, wobei das Steuergerät 46 entsprechend des erfindungsgemäßen Verfahrens eine Kraftstoffverbrauchsanzeige 31 ansteuert. Bei der dargestellten Brennkraftmaschine ist ein Kolben 32 in einem Zylinder 33 hin- und herbewegbar. Der Zylinder 33 ist mit einem Brennraum. 34 versehen, an den über Ventile 35 ein Ansaugrohr 36 und ein Abgasrohr 37 angeschlossen sind. Des Weiteren sind mit dem Brennraum 34 ein mit einem Signal TI ansteuerbares Einspritzventil 38 und eine mit einem Signal ZW ansteuerbare Zündkerze 39 verbunden. Die Signale TI und ZW werden hierbei von dem Steuergerät 46 an das Einspritzventil 38 bzw. die Zündkerze 39 übertragen.

Das Ansaugrohr 36 ist mit einem Luftmassensensor 40 und das Abgasrohr 37 mit einem Lambdasensor 41 versehen. Der Luftmassensensor 40 misst die Luftmasse der dem Ansaugrohr 36 zugeführten Frischluft und erzeugt in Abhängigkeit davon ein Signal LM. Der Lambdasensor 41 misst den Sauerstoffgehalt des Abgases in dem Abgasrohr 37 und erzeugt in Abhängigkeit davon ein Signal Lambda. Die Signale des Luftmassensensors 40 und des Lambdasensors 41 werden dem Steuergerät 46 zugeführt.

In dem Ansaugrohr 36 ist eine Drosselklappe 42 untergebracht, deren Drehstellung mittels eines Signals DK einstellbar ist. Weiterhin kann das Abgasrohr 37 über eine hier nicht dargestellte Abgasrückführungsleitung mit dem Ansaugrohr 36 verbunden sein. Die Steuerung der Abgasrückführung kann beispielsweise über ein vom Steuergerät 46 ansteuerbares, hier ebenfalls nicht dargestelltes, Abgasrückführventil erfolgen.

In einer ersten Betriebsart, dem Homogenbetrieb der Brennkraftmaschine, wird die Drosselklappe 42 in Abhängigkeit von der erwünschten, zugeführten Luftmasse teilweise geöffnet bzw. geschlossen. Der Kraftstoff wird von dem Einspritzventil 38 während einer durch den Kolben 32 hervorgerufenen Ansaugphase in den Brennraum 34 eingespritzt. Durch die gleichzeitig angesaugte Luft wird der eingespritzte Kraftstoff verwirbelt und damit dem Brennraum 34 im Wesentlichen gleichmäßig bzw. homogen verteilt. Danach wird das Kraftstoffluftgemisch während der Verdichtungsphase verdichtet, um dann von der Zündkerze 39 entzündet zu werden. Durch die Ausdehnung des entzündeten Kraftstoffs wird der Kolben 32 angetrieben.

In einer zweiten Betriebsart, dem Schichtbetrieb der Brennkraftmaschine, wird die Drosselklappe 42 weit geöffnet. Der Kraftstoff wird von dem Einspritzventil 38 während einer durch den Kolben 32 hervorgerufenen Verdichtungsphase in den Brennraum 34 eingespritzt. Dann wird mit Hilfe der Zündkerze 39 der Kraftstoff entzündet, so dass der Kolben 32 in der nunmehr folgenden Arbeitsphase durch die Ausdehnung des entzündeten Kraftstoffs angetrieben wird. Im Schichtbetrieb wie auch im Homogenbetrieb wird durch den angetriebenen Kolben eine Kurbelwelle 44 in eine Drehbewegung versetzt, über die letztendlich die Räder des Kraftfahrzeugs angetrieben werden. Auf der Kurbelwelle 44 ist ein Zahnrad angeordnet, dessen Zähne von einem unmittelbar gegenüber angeordneten Drehzahlsensor 45 abgetastet werden. Der Drehzahlsensor 45 erzeugt ein Signal, aus dem die Drehzahl N der Kurbelwelle 44 ermittelt wird und übermittelt dieses Signal N an das Steuergerät 46.

Die im Schichtbetrieb und im Homogenbetrieb von dem Einspritzventil 38 in den Brennraum eingespritzte Kraftstoffmasse wird von dem Steuergerät 46 insbesondere im Hinblick auf einen geringen Kraftstoffverbrauch und/ oder eine geringe Schadstoffentwicklung gesteuert und/oder geregelt. Auch die erfindungsgemäße Bestimmung eines korrigierten Kraftstoffmassenstroms MKPKORR wird im Steuergerät 46 durchgeführt. Zu diesem Zweck ist das Steuergerät 46 mit einem Mikroprozessor versehen, der in einem Speichermedium Programmcode abgespeichert hat, der dazu geeignet ist, die gesamte erfindungsgemäße Bestimmung des Ansteuersignals für die Kraftstoffverbrauchsanzeige 31 durchzuführen. Ein weiteres Eingangssignal, das dem Steuergerät 46 zugeführt wird, ist das Signal FP des Fahrpedalsensor 47, das die Stellung eines von einem Fahrer betätigbaren Fahrpedals bzw. eines Gaspedals und damit das dem Fahrer angeforderte Moment angibt.

Bezugszeichenübersicht:

| | |
|---|---|
| DMKP | Differenzkraftstoffmassenstrom |
| DMKPF | linear gefilterter Differenzkraftstoffmassenstrom |
| dTAU | Integrationszeitraum |
| ETALAM1,2 | Luftverhältniswirkungsgrad Zylinderbank 1,2 während besonderer Betriebsbedingungen |

| ETALAM0 | Luftverhältniswirkungsgrad im Normalbetrieb |
| ETAZW1,2 | Zündwinkelwirkungsgrad Zylinderbank 1,2 während besonderer Betriebsbedingungen |
| ETAZW0 | Zündwinkelwirkungsgrad im Normalbetrieb |
| F01,2 | dimensionsloser Faktor 1,2 |
| K1 | Konstante für Berechnung |
| Lambda1,2 | Luftverhältnis Zylinderbank 1,2 |
| MDR,0 | Verlustmoment durch Drosselung, im Normalbetrieb |
| MI,0 | inneres Moment, im Normalbetrieb |
| MIND,0 | indiziertes Moment, im Normalbetrieb |
| MKKORR | korrigierter Kraftstoffverbrauch |
| MKP | aktueller Kraftstoffmassenstrom |
| MKP0 | Kraftstoffmassenstrom, der sich ohne die bestimmte, temporäre Betriebssituation ergeben würde |
| MKPKORR | korrigierter Kraftstoffmassenstrom |
| RK | relative Kraftstoffmasse |
| RL,0 | relative Luftmasse, im Normalbetrieb |
| TTRIP | Zeitdauer des Fahrzyklus |
| ZW1,2 | Zündwinkel Zylinderbank 1,2 während besonderer Betriebsbedingungen |
| ZWBAS | Zündwinkel im Normalbetrieb (homogen) |

**Patentansprüche**

1. Verfahren zur Bestimmung von Kraftstoffverbrauchswerten bei Brennkraftmaschinen von Kraftfahrzeugen, insbesondere bei direkteinspritzenden Brennkraftmaschinen, wobei die Brennkraftmaschine wenigstens in zwei unterschiedlichen Betriebsarten betreibbar ist, **dadurch gekennzeichnet, dass** wenigstens in bestimmten, temporären Betriebssituationen die Kraftstoffverbrauchswerte (MKP) unter Berücksichtigung der jeweiligen Betriebsart korrigiert werden (MKPKORR, MKKORR).

2. Verfahren nach Anspruch 1, **dadurch gekennzeichnet, dass** die korrigierten Kraftstoffverbrauchswerte (MKPKORR, MKKORR) wenigstens auf einer optischen Anzeige (31) im Sichtfeld eines Fahrers des Kraftfahrzeugs angezeigt werden und/oder zur Bestimmung einer Restreichweite des Kraftfahrzeugs und/oder zur Bestimmung eines Tankinhalts des Kraftfahrzeugs herangezogen werden.

3. Verfahren nach Anspruch 2, **dadurch gekennzeichnet, dass** ein realer Kraftstoffverbrauchswert (MKP) mit einem betriebsartenabhängigen Faktor (F0) verknüpft wird (20, 21) und dass sich als Ergebnis der Verknüpfung (20, 21) ein durch einen Betriebsartenwechsel hervorgerufener Kräftstoffdifferenzverbrauchswert (DMKP) und ein Kraftstoffverbrauchswert (MKP0), der sich ohne den Betriebsartenwechsel ergeben hätte, ergeben.

4. Verfahren nach Anspruch 2, **dadurch gekennzeichnet, dass** der Kraftstoffdifferenzverbrauchswert (DMKP) zeitlich gefiltert wird, insbesondere linear, wobei das Filter (22) eine Filterzeitkonstante aufweist, die eine Größenordnung über einer Zeitdauer der Dauer der bestimmten, temporären Betriebssituationen liegt.

5. Verfahren nach Anspruch 4, **dadurch gekennzeichnet, dass** die Summe aus dem gefilterten Kraftstoffdifferenzverbrauchswert (DMKPF) und dem Kraftstoffverbrauchswert (DMKP0), der sich ohne den Betriebsartenwechsel ergeben hätte, den korrigierten Kraftstoffverbrauchswert (MKPKORR) ergibt.

6. Verfahren nach Anspruch 1, **dadurch gekennzeichnet, dass** die verschiedenen Betriebsarten wenigstens eine Homogenbetriebsart, während der Kraftstoff wenigstens in einer durch einen sich bewegenden Kolben hervorgerufenen Ansaugphase in einen Brennraum eingespritzt wird, und eine Schichtbetriebsart, während der Kraftstoff wenigstens in einer durch den sich bewegenden Kolben hervorgerufenen Verdichtungsphase in den Brennraum eingespritzt wird, umfassen.

7. Verfahren nach Anspruch 1, **dadurch gekennzeichnet, dass** die verschiedenen Betriebsarten wenigstens eine Nacheinspritzbetriebsart umfassen, während der Kraftstoff nach bereits erfolgter Kompressionszündung eines sich bereits in einem Brennraum befindlichen Kraftstoff-Luft-Gemisches in den Brennraum eingespritzt wird.

8. Verfahren nach Anspruch 6 oder 7, **dadurch gekennzeichnet, dass** die bestimmten, temporären Betriebssituationen wenigstens eine Katalysatorreinigung umfassen, durch die ein temporärer Wechsel der Betriebsart ausgelöst wird.

**9.** Verfahren nach Anspruch 8, **dadurch gekennzeichnet, dass** durch die Katalysatorreinigung im Falle einer Benzin-Brennkraftmschine ein Stickoxid-Speicherkatalysator und im Falle einer Diesel-Brennkraftmaschine ein Partikelfilter gereinigt wird.

**10.** Steuergerät für eine Brennkraftmaschine, insbesondere eines Kraftfahrzeugs, **dadurch gekennzeichnet, dass** Mittel zur Durchführung der Schritte des Verfahrens nach wenigstens einem der Ansprüche von 1 bis 9 vorhanden sind.

**11.** Computerprogramm mit Programmcode-Mitteln, um alle Schritte von jedem beliebigen der Ansprüche 1 bis 9 durchzuführen, wenn das Programm auf einem Computer, insbesondere einem Steuergerät für eine Brennkraftmaschine, ausgeführt wird.

**12.** Computerprogrammprodukt mit Programmcode-Mitteln, die auf einem computerlesbaren Datenträger gespeichert sind, um das Verfahren nach jedem beliebigen der Ansprüche 1 bis 9 durchzuführen, wenn das Programmprodukt auf einem Computer, insbesondere einem Steuergerät für eine Brennkraftmaschine, ausgeführt wird.

10 — MKP    F0 — 11

12 — MKP0

**Fig. 1**

13 — DMKP

14 — DMKPF

15 — MKPKORR

16 — MKKORR

F0

MKP

20    MKP0                23            24

MKPKORR        MKKORR

+        DMKPF

21    DMKP    22

**Fig. 2**

Fig. 3